Europäisches Patentamt

(19) European Patent Office

Office européen des brevets

(11) EP 0 822 521 A2

(12) EUROPEAN PATENT APPLICATION

(43) Date of publication:
04.02.1998 Bulletin 1998/06

(51) Int. Cl.6: G06T 17/10

(21) Application number: 97113163.6

(22) Date of filing: 30.07.1997

(84) Designated Contracting States:
AT BE CH DE DK ES FI FR GB GR IE IT LI LU MC
NL PT SE
Designated Extension States:
AL LT LV RO SI

(30) Priority: 31.07.1996 JP 201709/96

(71) Applicants:
• TOYOTA JIDOSHA KABUSHIKI KAISHA
Aichi-ken (JP)
• BPA Inc.
Fukuoka-shi, Fukuoka-ken 810 (JP)

(72) Inventors:
• Kasahara, Ikuo
Toyota-shi, Aichi-ken (JP)

• Ohnishi, Akihiro
Fukuoka-shi, Fukuoka-ken (JP)
• Nakamura, Hisanori
Fukuoka-shi, Fukuoka-ken (JP)
• Sakai, Hirohisa
Fukuoka-shi, Fukuoka-ken (JP)
• Mitsuta, Kenichi
Fukuoka-shi, Fukuoka-ken (JP)

(74) Representative:
Leson, Thomas Johannes Alois, Dipl.-Ing. et al
Patentanwälte
Tiedtke-Bühling-Kinne & Partner,
Bavariaring 4
80336 München (DE)

(54) Method and apparatus for generating three-dimensional solid models

(57) Method and apparatus for generating a three-dimensional solid model on the basis of three-dimensional wire-frame models, wherein projection boundaries of the fire-frame models are obtained by projection in two or three two-dimensional planes of a three-dimensional rectangular coordinate system (38, SA1, SC1), and maximum and minimum coordinate values of each projection boundary in two directions of the axes defining the plane of each projection boundary are determined (40, SA2, SC2), and wherein the projection boundaries which have the same maximum and minimum coordinate values in the direction of the common axis of each plane are determined as a set of sweep boundaries (42, SA3, SA4, SC6-SC12), so that the determined sweep boundaries are swept in respective directions perpendicular to the two-dimensional planes, to obtain an intersecting portion of geometries generated by the sweeping of the sweep boundaries, and to determine a three-dimensional solid model on the basis of the intersecting portion (44, SA6-SA8, SC14-SC16, SC18).

FIG. 1

CAD SYSTEM 10

12 CENTRAL PROCESSING UNIT

14 PRIMARY STORAGE DEVICE
16 AUXILIARY STORAGE DEVICE
18 DISPLAY DEVICE
20 KEYBOARD
22 TABLET
24 DIAL
26 PRINTER
28 PAPER TAPE PUNCHER
30 NETWORK CONTROLLER

EP 0 822 521 A2

**Description**

BACKGROUND OF THE INVENTION

Field of the Invention

The present invention relates to a method and an apparatus for efficiently generating three-dimensional solid models, as in a three-dimensional modeling system using a computer, such as computer-aided design (CAD) and computer-aided manufacturing (CAM) systems.

Discussion of the Related Art

As a process of generating three-dimensional solid models as in a CAD or CAM system, there is proposed a three-dimensional solid model generating method including the steps of: defining surfaces of each of three-dimensional objects in the three-dimensional rectangular coordinate system, on the basis of already stored three-dimensional wire-frame models corresponding to the objects; generating candidate solids by combining the defined surfaces; and generating a new three-dimensional solid model by comparing three projection boundaries of the candidate solids. According to this method, the three projection boundaries in the mutually perpendicular two-dimensional X-Y, Y-Z and X-Z planes are swept or translated in the respective Z-axis, X-axis and Y-axis directions which are perpendicular to the X-Y, Y-Z and X-Z planes, respectively. As a result, three endless geometries which have the cross sectional shapes corresponding to the respective projection boundaries and which are endless in the sweeping directions are formed in the three-dimensional rectangular coordinate system. A mutually intersecting or overlapping portion of the three endless geometries is recognized as a three-dimensional solid model.

However, the conventional three-dimensional solid model generating method requires the sweeping of a multiplicity of combinations of the three projection boundaries which are obtained by projection of many three-dimensional wire-frame models in the three mutually perpendicular two-dimensional planes, so that desired three-dimensional solid models are generated on the basis of intersecting portions of the geometries obtained as a result of the sweeping operations. This method suffers from a considerably long time required for the computer to operate for generating the desired three-dimensional solid model, since all possible combinations of the projection boundaries of the stored wire-frame models are subject to the sweeping operations.

SUMMARY OF THE INVENTION

It is therefore a first object of the present invention to provide a method by which a three-dimensional solid model can be effectively generated by sweeping at least two projection boundaries of already stored three-dimensional wire-frame models.

It is a second object of the invention to provide an apparatus suitable for practicing the method of the invention.

The first object indicated above may be achieved according to a first aspect of this invention, which provides a method of generating a three-dimensional solid model on the basis of three-dimensional wire-frame models, wherein projection boundaries of the wire-frame models obtained by projection in at least two of three mutually perpendicular two-dimensional planes of a three-dimensional rectangular coordinate system are swept in respective directions perpendicular to the above-indicated at least two two-dimensional planes, to obtain an intersecting portion of at least two geometries which are generated by sweeping of the projection boundaries, the intersecting portion being determined as a three-dimensional solid model, the method comprising: (a) a maximum and minimum coordinate determining step of determining maximum coordinate values and minimum coordinate values of each of the projection boundaries in two directions parallel to respective two axes which define the two-dimensional plane of the above-indicated each projection boundary; (b) a sweep boundary determining step of determining sets of sweep boundaries each set consisting of the projection boundaries in the above-indicated at least two two-dimensional planes, which boundaries have the same maximum and minimum coordinate values in the direction of the axis which is common to the above-indicated at least two two-dimensional planes; and (c) a three-dimensional solid model generating step of generating a three-dimensional solid model on the basis of the intersecting portion of the above-indicated bit least two geometries generated by sweeping of the sweep boundaries determined in the sweep boundary determining step.

In the present solid model generating method of the invention, the maximum and minimum coordinate determining step is formulated to determine the maximum and minimum coordinate values of each projection boundary of each three-dimensional wire-frame model in the directions of the two axes which define the two-dimensional plane of the projection boundary in question. Further, the sweep boundary determining step is formulated to determine sets of sweep boundaries each set consisting of at least two projection boundaries whose maximum and minimum coordinate values are equal to each other. The three-dimensional solid model generating step is formulated to generate a three-dimensional solid model on the basis of the intersecting portions of endless geometries which are generated by sweeping of the sweep boundaries and which have the cross sectional shapes corresponding to the sweep boundaries. In the present method, the number of the sweep boundaries which are determined in the sweep boundary determining step and which are swept in the solid model generating step is considerably smaller than the number of all possible combinations of the projection boundaries of the wire-frame models which are swept to generate the solid model in the conventional three-dimensional solid model generating method. Accordingly, the time required for a computer to operate for generating the desired solid model is significantly reduced in the present method.

The second object indicated above may be achieved according to a second aspect of this invention, which provides an apparatus for generating a three-dimensional solid model on the basis of three-dimensional wire-frame models, wherein projection boundaries of the wire-frame models obtained by projection in at least two of three mutually perpendicular two-dimensional planes of a three-dimensional rectangular coordinate system are swept in respective directions perpendicular to the above-indicated at least two two-dimensional planes, to obtain an intersecting portion of at least two geometries which are generated by sweeping of the projection boundaries, the intersecting portion being determined as a three-dimensional solid model, the apparatus comprising: (a) maximum and minimum coordinate determining means for determining maximum coordinate values and minimum coordinate values of each of the projection boundaries in two directions parallel to respective two axes which define the two-dimensional plane of the above-indicated each projection boundary; (b) sweep boundary determining means for determining sets of sweep boundaries each set consisting of the projection boundaries in the above-indicated at least two two-dimensional planes, which boundaries have the same maximum and minimum coordinate values in the direction of the axis which is common to the above-indicated at least two two-dimensional planes; and (c) three-dimensional solid model generating means for generating a three-dimensional solid model on the basis of the intersecting portion of the above-indicated at least two geometries generated by sweeping of the sweep boundaries determined by the sweep boundary determining means.

In the present solid model generating apparatus of the invention, the maximum and minimum coordinate determining means is adapted to determine the maximum and minimum coordinate values of each projection boundary of each three-dimensional wire-frame model in the directions of the two axes which define the two-dimensional plane of the projection boundary in question. Further, the sweep boundary determining means is adapted to determine sets of sweep boundaries each set consisting of at least two projection boundaries whose maximum and minimum coordinate values are equal to each other. The three-dimensional solid model generating means is adapted to generate a three-dimensional solid model on the basis of the intersecting portions of endless geometries which are generated by sweeping of the sweep boundaries and which have the cross sectional shapes corresponding to the sweep boundaries. In the present method, the number of the sweep boundaries which are determined by the sweep boundary determining means and which are swept by the solid model generating means is considerably smaller than the number of all possible combinations of the projection boundaries of the wire-frame models which are swept to generate the solid model in the conventional three-dimensional solid model generating method. Accordingly, the time required for a computer to operate for generating the desired solid model is significantly reduced in the present method.

The maximum and minimum coordinate determining step or means may comprise a step or means for determining the maximum coordinate values and the minimum coordinate values of each of the two projection boundaries in the respective two two-dimensional planes selected from the three mutually perpendicular two-dimensional planes of the rectangular coordinate system.

In the above case, the sweep boundary determining step or means is adapted to determine a set of two sweep boundaries which consists of the two projection boundaries having the same maximum and minimum coordinate values in the direction of the axis common to the two two-dimensional planes, and the three-dimensional solid model generating step or means is adapted to generate the three-dimensional solid model on the basis of the intersecting portion of the two geometries generated by sweeping of the determined two sweep boundaries. In this case, the number of the sweep boundaries that are swept in the solid model generating step or by the solid model generating means is significantly reduced, whereby the required time for generating the solid model is accordingly reduced.

The method or apparatus may further comprise checking step or means for checking whether there exists only one projection boundary in one of the three two-dimensional planes, which one projection boundary has the maximum and minimum coordinate values as any projection boundary in another of the three two-dimensional planes in the direction of the common axis of the above-indicated one and another two-dimensional planes. In this case, the three-dimensional solid model generating step or means is adapted to initiate an operation to generate the three-dimensional solid model, without determining whether the maximum and minimum coordinate values of the projection boundaries in the above-indicated one and another two-dimensional planes are equal to those of the projection boundary in the rest of the three two-dimensional plane in the directions of the common axes, if there exists only one projection boundary in the above-indicated one two-dimensional plane. For instance, if there exists only one projection boundary in the X-Y plane whose maximum and minimum y-axis coordinate values are equal to the maximum and minimum y-axis coordinate values of the projection boundary in the Y-Z plane, it is not necessary to determine whether the maximum and minimum z-axis coordinate values of the projection boundary in the Y-Z plane are equal to the maximum and minimum z-axis coordinate values of the projection boundary in the X-Z plane, and whether the maximum and minimum x-axis coordinate values of the projection boundary in the X-Y plane are equal to the maximum and minimum x-axis coordinate values of the projection boundary in the X-Z plane. In this case, the solid model generating step is initiated or the solid model generating means is operated without the sweep boundary determining step or means being implemented or operated for the above determinations with respect to the maximum and minimum z-axis and x-axis coordinate values, so that the solid model is generated on the basis of the intersecting portion of the two geometries generated by the sweeping of the two projection boundaries in the X-Y and Y-Z planes.

BRIEF DESCRIPTION OF THE DRAWINGS

The above and optional objects, features, advantages and technical and industrial significance of this invention will be better understood by reading the following detailed description of presently preferred embodiments of the invention, when considered in connection with the accompanying drawings, in which:

Fig. 1 is a block diagram illustrating a CAD system constructed according to one embodiment of the present invention;

Fig. 2 is a block diagram illustrating functional means of a central processing unit of the CAD system of Fig. 1, together with the content of a primary storage device;

Fig. 3 is a view showing one example of three-dimensional wire-frame models from which a three-dimensional solid model is automatically generated by the central processing unit;

Fig. 4 is a flow chart illustrating a routine executed by the central processing unit to automatically generate the surfaces of a three-dimensional solid model;

Fig. 5 is a view for explaining maximum and minimum coordinate values of projection boundaries determined in step SA2 of the routine of Fig. 4;

Fig. 6 is a flow chart corresponding to that of Fig. 4, illustrating a conventional three-dimensional solid model generating routine;

Figs. 7 and 8 are flow charts illustrating a routine executed by a central processing unit according to another embodiment of this invention, to automatically generate the surfaces of a three-dimensional solid model;

Fig. 9 is a view for explaining a three-dimensional wire-frame model used in the embodiment of Figs. 7 and 8; and

Fig. 10 is a view for explaining in detail step SC2 of the routine of Figs. 7 and 8.

DETAILED DESCRIPTION OF THE PREFERRED EMBODIMENTS

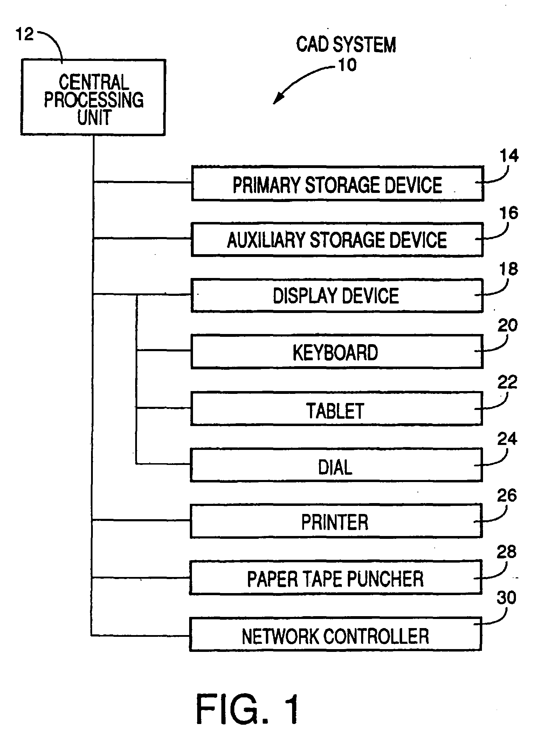

Referring first to the block diagram of Fig. 1, a computer-aided design (CAD) system 10 includes a central processing unit 12, a primary storage device 14 incorporating a random-access memory (RAM) and a read-only memory (ROM), and an expandable auxiliary storage device 16 such as a hard disc device, an MO storage and a tape storage. The central processing unit 12 operates to perform various operations according to control programs stored in the primary storage device 14, while utilizing a temporary data storage function of the primary storage device 14 and auxiliary storage device 16. The operations performed by the central processing unit 12 include: operations to generate or modify three-dimensional wire-frame models; operations to define the surfaces of three-dimensional objects from the three-dimensional wire-frame models; operations to generate, expand, contract, modify, move (translate) and rotate solid models on the basis of the three-dimensional wire-frame models whose surfaces have been defined; operations to obtain a sum (a union set), a difference (a difference set) or a product (an intersection set) of three-dimensional models; and operations to define cross sectional shapes of desired portions of three-dimensional models.

The CAD system 10 further includes a display device 18 such as a cathode ray tube (CRT) or a liquid crystal display (LCD) panel, a keyboard 20, a tablet 22, and a dial 24. The display device 18 is adapted to provide visual representation of images such as three-dimensional models, and operation menu which permits the operator of the system to easily select desired operations to be performed. The keyboard 20, tablet 22 and dial 24 function as a data input device through which the operator enters appropriate data necessary to generate three-dimensional models, and numerical control (NC) data for moving the three-dimensional models. The data input device is also used for commanding the system to perform the operations to expand, contract, modify, move or rotate the three-dimensional models, to obtain the sum, difference or product of the three-dimensional models, and to select the desired operation through the menu provided on the display device 18.

The CAD system is equipped with a printer 26, a paper tape puncher 28, and a network controller 30. The printer 26 is capable of printing NC data, and other data as displayed on the display device 18 or obtained by the central processing unit 12. The paper tape puncher 28 is provided to prepare NC tapes used by machine tools for machining operations. The network controller 30 is connected to a work station or machine tools for data communications therebetween.

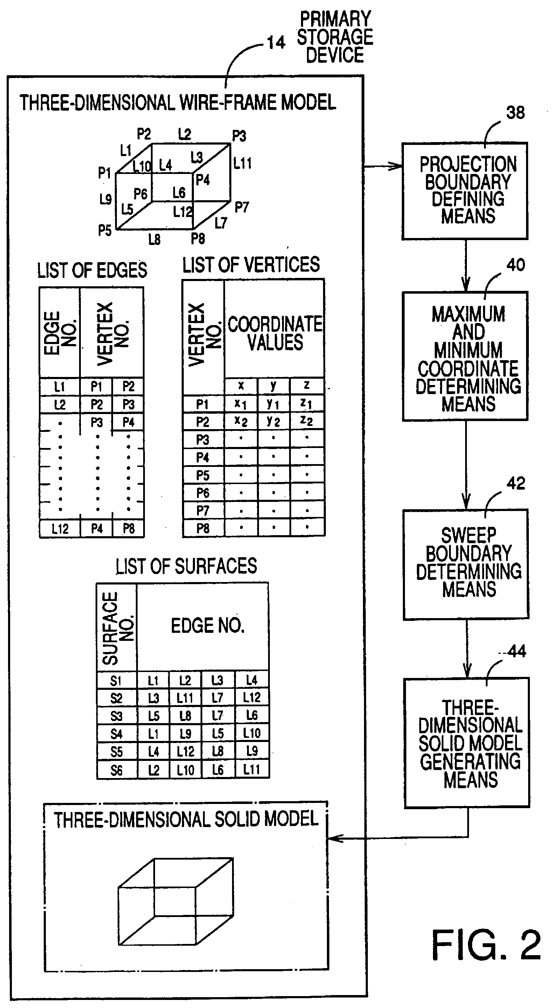

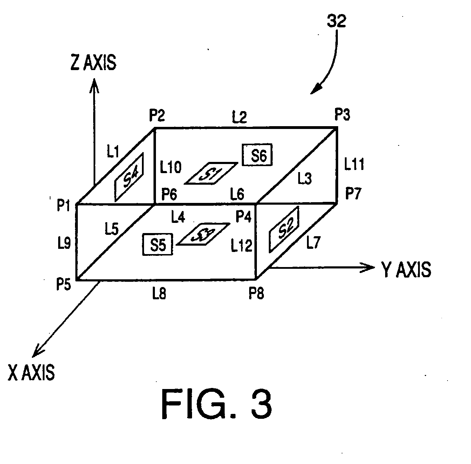

Referring to the block diagram of Fig. 2, there are illustrated functional means of the central processing unit 12 which are provided to automatically generate three-dimensional solid models from three-dimensional wire-frame models which are already generated and stored in the primary storage device 14. As shown in Fig. 2, each of these stored three-dimensional wire-frame models includes a list of the coordinate values of each vertex (apex) P, and a list of edges (segments) L each of which is defined by adjacent two vertices P. Where the three-dimensional wire-frame model represents a rectangular parallepiped 32 as shown in Fig. 3, by way of example, the list of the vertices P and the list of the edges L are as indicated in TABLES 1 and 2 given below:

TABLE 1

|  | VERTEX NO. | X-COORDINATE | Y-COORDINATE | Z-COORDINATE |
|---|---|---|---|---|
| No. 1 | P1 | x1 | y1 | z1 |
| No. 2 | P2 | x2 | y2 | z2 |
| No. 3 | P3 | x3 | y3 | z3 |
| No. 4 | P4 | x4 | y4 | z4 |
| No. 5 | P5 | x5 | y5 | z5 |
| No. 6 | P6 | x6 | y6 | z6 |
| No. 7 | P7 | x7 | y7 | z7 |
| No. 8 | P8 | x8 | y8 | z8 |

TABLE 2

|  | EDGE NO. | VERTEX NO. |  | EDGE NO. | VERTEX NO. |
|---|---|---|---|---|---|
| No. 1 | L1 | P1, P2 | No. 7 | L7 | P7, P8 |
| No. 2 | L2 | P2, P3 | No. 8 | L8 | P8, P5 |
| No. 3 | L3 | P3, P4 | No. 9 | L9 | P1, P5 |
| No. 4 | L4 | P4, P1 | No. 10 | L10 | P2, P6 |
| No. 5 | L5 | P5, P6 | No. 11 | L11 | P3, P7 |
| No. 6 | L6 | P6, P7 | No. 12 | L12 | P4, P8 |

In TABLES 1 and 2, the vertices P are represented by the X-, Y- and Z-coordinate values x, y and z in the X-Y-Z rectangular coordinate system, while each edge L is represented or defined by the two vertices corresponding to its opposite ends (start and end points).

TABLE 3 given below indicates a list of surfaces S of a three-dimensional object, which surfaces S are automatically defined by suitable surface defining means (not shown), on the basis of the list of vertices P and the list of edges L. The list of surfaces S of each of the three-dimensional objects is prepared before a new three-dimensional solid model is generated from the wire-frame models of the objects.

TABLE 3

| | SURFACE NO. | EDGE NO. |
|---|---|---|
| No. 1 | S1 | L1, L2, L3, L4 |
| No. 2 | S2 | L3, L11, L7, L12 |
| No. 3 | S3 | L5, L8, L7, L6 |
| No. 4 | S4 | L1, L9, L5, L10 |
| No. 5 | S5 | L4, L12, L8, L9 |
| No. 6 | S6 | L2, L10, L6, L11 |

The central processing unit 12 includes projection boundary defining means 38, maximum and minimum coordinate determining means 40, sweep boundary determining means 42 and three-dimensional solid model generating means 44.

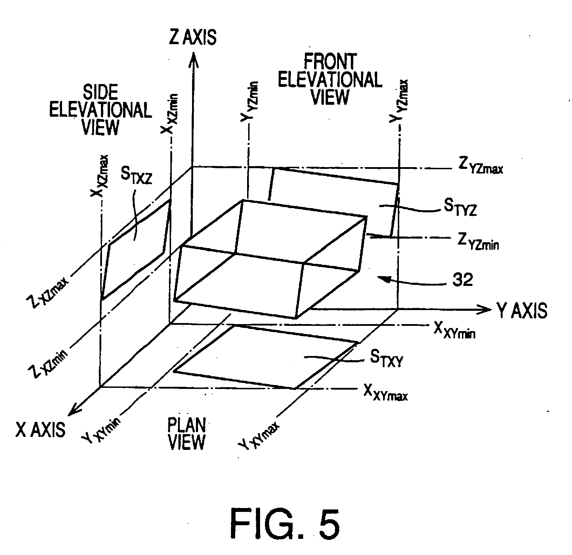

The projection boundary defining means 38 is adapted to define three projection boundaries $S_T$ of each wire-frame model (e.g., rectangular parallepiped 32) in respective three mutually perpendicular two-dimensional planes, on the basis of the lists of vertices and edges stored in the primary storage device 14. Described more specifically, the three projection boundaries $S_T$ consist of a projection boundary $S_{TXY}$ obtained by projection in the X-Y plane in the three-dimensional rectangular X-Y-Z coordinate system, a projection boundary $S_{TYZ}$ obtained by projection in the Y-Z Plane, and a projection boundary $S_{TXZ}$ obtained by projection in the X-Z plane, as indicated in Fig. 5. These three projection boundaries $S_{TXY}$, $S_{TYZ}$ and $S_{TXZ}$ are obtained for each of the stored wire-frame models, by determining respective closed loops which are defined by appropriate sets of edges (selected from the edges L1-L12) projected in the respective X-Y, Y-Z and X-Z planes. The three projection boundaries $S_{TXY}$, $S_{TYZ}$ and $S_{TXZ}$ correspond to the plan view, front elevational view and side elevational view, respectively, as indicated in Fig. 5.

The maximum and minimum coordinate determining means 40 is adapted to determine the maximum and minimum coordinate values of each of the three projection boundaries $S_T$ (i.e., projection boundaries $S_{TXY}$, $S_{TYZ}$ and $S_{TXZ}$) in the two directions parallel to the two axes which define the two-dimensional plane of the projection boundary $S_T$ in question. Explained in detail by reference to Fig. 5, the maximum and minimum coordinate determining means 40 determines: the maximum coordinate value $X_{XYmax}$ and the minimum coordinate value $X_{XYmin}$ of the projection boundary $S_{TXY}$ in the X-axis direction in the X-Y plane, and the maximum coordinate value $Y_{XYmax}$ and the minimum coordinate value $Y_{XYmin}$ of the projection boundary $S_{TXY}$ in the Y-axis direction in the X-Y plane; the maximum coordinate value $X_{YZmax}$ and the minimum coordinate value $X_{UZmin}$ of the projection boundary $S_{TYZ}$ in the X-axis direction in the Y-Z plane, and the maximum coordinate value $X_{YZmax}$ and the minimum coordinate value $Y_{YZmin}$ of the projection boundary $S_{TYZ}$ in the Y-axis direction in the Y-Z plane; and the maximum coordinate value $X_{XZmax}$ and the minimum coordinate value $X_{XZmin}$ of the projection boundary $S_{TXZ}$ in the X-axis direction in the X-Z plane, and the maximum coordinate value $Y_{XZmax}$ and the minimum coordinate value $Y_{XZmin}$ of the projection boundary $S_{TXZ}$ in the Y-axis direction in the X-Z plane. For those three-dimensional wire-frame models which are so simple in geometry that a solid model can be generated by sweeping only two projection boundaries $S_T$ determined by the sweep boundary determining means 42 (described below), the maximum and minimum coordinate values of the third projection boundary $S_T$ need not be determined. Therefore, the maximum and minimum coordinate determining means 40 may be adapted not to determine the maximum and minimum coordinate values of the third projection boundary

The sweep boundary determining means 42 is adapted to determine sets of sweep boundaries Ri, each set consisting of at least two, preferably three projection boundaries $S_T$ in the respective two or three two-dimensional planes of the rectangular three-dimensional coordinate system. This determination is effected on the basis of the maximum and minimum coordinate values of the projection boundaries $S_T$ of the various wire-frame models, which have been determined by the maximum and minimum coordinate determining means 40 as discussed above. For instance, each set of sweep boundaries Ri determined by the sweep boundary determining means 42 consists of the three projection boundaries $S_{TXY}$, $S_{TYZ}$ and $S_{TXZ}$. Described in detail, the sweep boundary determining means 42 compares the maximum coordinate values $Y_{XYmax}$ and $Y_{YZmax}$ of the projection boundaries $S_{TXY}$ and $S_{TYZ}$ in the common Y-axis direction, and further compares the minimum coordinate values $Y_{XYmin}$ and $Y_{YZmin}$ of these projection boundaries $S_{TXY}$ and $S_{TYZ}$ in the Y-axis direction. Similarly, the sweep boundary determining means 42 compares the maximum coordinate values $X_{XYmax}$ and $X_{XZmax}$ of the projection boundaries $S_{TXY}$ and $S_{TXZ}$ in the common X-axis direction, and further compares the minimum coordinate values $X_{XYmin}$ and $X_{XZmin}$ of these projection boundaries $S_{TXY}$ and $S_{TXZ}$ in the X-axis direction. Further, the sweep boundary determining means 42 compares the maximum coordinate values $Z_{XZmax}$ and $Z_{YZ-}$

$_{max}$ of the projection boundaries $S_{TXZ}$ and $S_{TYZ}$ in the common Z-axis direction, and further compares the minimum coordinate values $Z_{XZmin}$ and $Z_{YZmin}$ of these projection boundaries $S_{TXZ}$ and $S_{TYZ}$ in the Z-axis direction. The sweep boundary determining means 42 determines the projection boundaries $S_{TXY}$, $S_{TYZ}$ and $S_{TXZ}$ as a set of three sweep boundaries Ri, (a) if the maximum coordinate values $Y_{XYmax}$ and $Y_{YZmax}$ are equal to each other while the minimum coordinate values $Y_{XYmin}$ and $X_{YZmin}$ are equal to each other, (b) if the maximum coordinate values $X_{XYmax}$ and $X_{XZmax}$ are equal to each other while the minimum coordinate values $X_{XYmin}$ and $X_{XZmin}$ are equal to each other, and (c) if the maximum coordinate values $Z_{XZmax}$ and $Z_{YZmax}$ are equal to each other while the minimum coordinate values $Z_{XZmin}$ and $Z_{YZmin}$ are equal to each other. In this case, all combinations of the three projection boundaries of all three-dimensional wire-frame models are checked to determine whether each combination can be qualified as a set of three sweep boundaries Ri.

Where the maximum and minimum coordinate determining means 40 is adapted to determine the maximum and minimum coordinate values of only the selected two projection boundaries $S_T$, the sweep boundary determining means 42 determines sets of two sweep boundaries Ri.

The three-dimensional solid model generating means 44 is adapted to generate a three-dimensional solid model by sweeping at least two sweep boundaries Ri of each set determined by the sweep boundary determining means 44, in the three-dimensional X-Y-Z rectangular coordinate system, such that each sweep boundary Ri is swept or translated in a direction perpendicular to the two-dimensional plane of the sweep boundary Ri. Where the sweep boundary Ri is the projection boundary $S_{TXY}$, for example, the sweep boundary Ri ($S_{TXY}$) is translated in the Z-axis direction perpendicular to the X-Y plane of the projection boundary $S_{TXY}$. With the two or three sweep boundaries Ri swept or translated, respective endless geometries which have the cross sectional shapes corresponding to the sweep boundaries Ri and which are endless in the sweeping directions are formed such that these endless geometries intersect or overlap each other. The solid model generating means 44 determines the intersecting or overlapping portion as a new three-dimensional solid model, and automatically generates boundary data representative of the solid model.

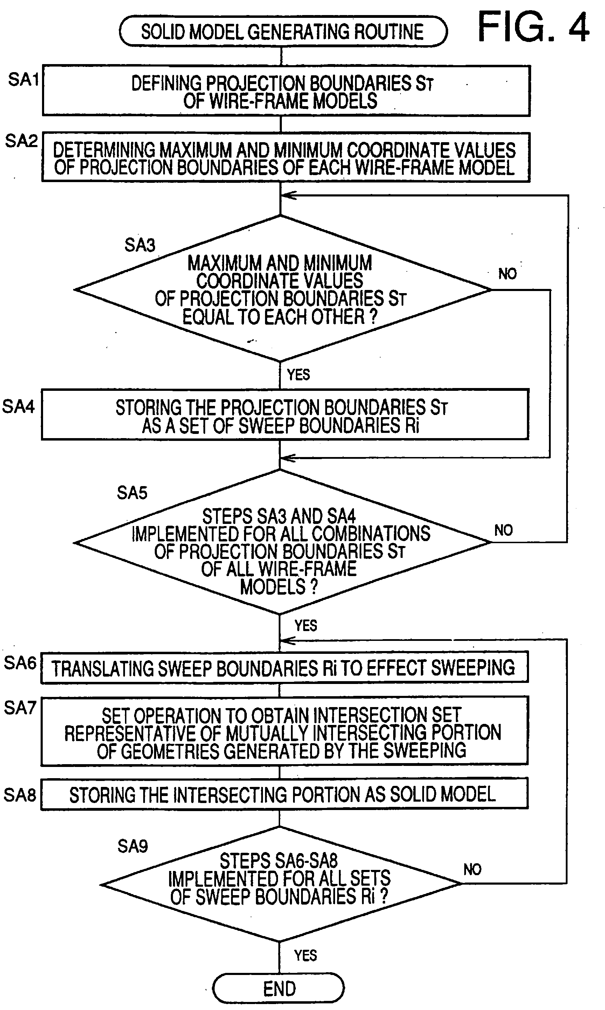

The central processing unit 12 is adapted to execute a control routine illustrated in the flow chart of Fig. 4. The routine is initiated with step SA1 corresponding to the projection boundary defining means 38, to read the edges or segments constituting each of the three-dimensional wire-frame models (such as the rectangular parallepiped 32) which are used to generate a three-dimensional solid model. Also in step SA1, the projection boundaries $S_T$ (e.g., $S_{TXY}$, $S_{TYZ}$ and $S_{TXZ}$) in the respective X-Y, Y-Z and X-Z planes in the three-dimensional rectangular X-Y-Z coordinate system are defined, depending upon whether closed loops are defined by appropriate sets of the edges projected in the respective X-Y, Y-Z and X-Z planes.

Step SA1 is followed by step SA2 corresponding to the maximum and minimum coordinate determining means 40, to determine the maximum and minimum coordinate values of each of the two or three projection boundaries $S_T$ of each wire-frame model. When the sweep boundary determining means 42 is adapted to determine each set of three sweep boundaries Ri, the maximum and minimum coordinate determining means 40 determines the maximum and minimum coordinate values $X_{XYmax}$ and $X_{XYmin}$ of the projection boundary $S_{TXY}$ in the X-axis direction in the X-Y plane, the maximum and minimum coordinate values $Y_{XYmax}$ and $Y_{XYmin}$ of the projection boundary $S_{TXY}$ in the Y-axis direction in the X-Y plane, the maximum and minimum coordinate values $X_{YZmax}$ and $X_{YZmin}$ of the projection boundary $S_{TYZ}$ in the X-axis direction in the Y-Z plane, the maximum and minimum coordinate values $Y_{YZmax}$ and $Y_{YZmin}$ of the projection boundary $S_{TYZ}$ in the Y-axis direction in the Y-Z plane, the maximum coordinate and minimum values $X_{XZmax}$ and $X_{XZmin}$ of the projection boundary $S_{TXZ}$ in the X-axis direction in the X-Z plane, and the maximum coordinate and minimum values $Y_{XZmax}$ and $Y_{XZmin}$ of the projection boundary $S_{TXZ}$ in the Y-axis direction in the X-Z plane.

Then, the control flow goes to step SA3 to point or designate one of possible combinations of the two or three projection boundaries $S_T$, and determine whether the maximum coordinate values of the currently pointed combination of the projection boundaries $S_T$ in the common axis direction are equal to each other while at the same time the minimum coordinate values of these projection boundaries $S_T$ are equal to each other. If a negative decision (NO) is obtained in step SA2, the control flow goes to step SA5. If an affirmative decision (YES) is obtained in step SA3, the control flow goes to step SA4 to determine the currently pointed combination of the projection boundaries $S_T$ as a set of sweep boundaries Ri (two or three sweep boundaries Ri), and stores this set of sweep boundaries Ri in the primary storage device 14. These steps SA3 and SA4 correspond to the sweep boundary determining means 42.

For instance, all of the three projection boundaries $S_{TXY}$, $S_{TYZ}$ and $S_{TXZ}$ are determined and stored as a set of three sweep boundaries Ri, in steps SA3 and SA4, (a) if the maximum coordinate values $Y_{XYmax}$ and $Y_{YZmax}$ are equal to each other while the minimum coordinate values $Y_{XYmin}$ and $Y_{YZmin}$ are equal to each other, (b) if the maximum coordinate values $X_{XYmax}$ and $X_{XZmax}$ are equal to each other while the minimum coordinate values $X_{XYmin}$ and $X_{XZmin}$ are equal to each other, and (c) if the maximum coordinate values $Z_{XZmax}$ and $Z_{YZmax}$ are equal to each other while the minimum coordinate values $Z_{XZmin}$ and $Z_{YZmin}$ are equal to each other, as indicated above.

Step SA4 is followed by step SA5 to determine whether steps SA3 and SA4 have been implemented for all possible combinations of the projection boundaries $S_T$ of all three-dimensional wire-frame models. If a negative decision (NO) is obtained in step SA5, the control flow goes back to step SA3 in which the next combination of the projection boundaries

$S_T$ is pointed. Steps SA3 and SA4 are repeatedly implemented until an affirmative decision (YES) is obtained in step SA5. Thus, all combinations of the projection boundaries $S_T$ are sequentially pointed and subjected to the comparison of the maximum and minimum coordinate values for determination of the sets of sweep boundaries RI.

When the affirmative decision (YES) is obtained in step SA5, the control flow goes to step SA6 and the subsequent steps for generating a three-dimensional solid model.

In step SA6, one of the sets of sweep boundaries Ri is pointed or designated, and the sweep boundaries Ri (e.g., three projection boundaries $S_{TXY}$, $S_{TXZ}$ and $S_{TYZ}$) are swept or translated in the directions perpendicular to the respective planes of the sweep boundaries Ri. For instance, the projection boundary $S_{TXY}$ if selected as a sweep boundary Ri is translated in the Z-axis direction perpendicular to the X-Y plane of the projection boundary $S_{TXY}$. Similarly, the projection boundary $S_{TYZ}$ if selected as a sweep boundary Ri is translated in the X-axis direction perpendicular to the Y-Z plane of the projection boundary $S_{TYZ}$, and the projection boundary $S_{TXZ}$ if selected as a sweep boundary Ri is translated in the Y-axis direction perpendicular to the X-Z plane of the projection boundary $S_{TXZ}$.

Step SA6 is followed by step SA7 to perform a set operation for calculating an intersection set of the endless geometries formed by the sweeping or translation of the two or three sweep boundaries Ri. The intersection set represents a mutually intersecting or overlapping portion of the formed endless geometries. Step SA7 is followed by step SA8 to determine the intersecting portion as a three-dimensional solid model. Boundary data representative of the surfaces of the solid model are stored in the primary storage device 14. It will be understood that steps SA6, SA7 and SA8 correspond to the three-dimensional solid model generating means 44.

Then, the control flow goes to step SA9 to determine whether steps SA6, SA7 and SA8 have been implemented for all of the sets of sweep boundaries Ri determined by the sweep boundary determining means 42. If a negative decision (NO) is obtained, the control flow goes back to step SA6 in which the next set of sweep boundaries Ri is pointed, and the sweep boundaries of the pointed set are swept. Steps SA6-SA8 are repeatedly implemented until an affirmative decision (YES) is obtained in step SA9. When the affirmative decision is obtained in step SA9, the routine of Fig. 4 is terminated.

In the present embodiment of the invention, the maximum and minimum coordinate determining means 40 and the corresponding step SA2 are adapted or formulated to determine the maximum and minimum coordinate values of each projection boundary $S_T$ of each three-dimensional wire-frame model in the directions of the two axes which define the two-dimensional plane of the projection boundary $S_T$ in question. Further, the sweep boundary determining means 42 and the corresponding steps SA3 and SA4 are adapted or formulated to determine sets of sweep boundaries Ri each set consisting of at least two projection boundaries $S_T$ whose maximum and minimum coordinate values are equal to each other as described above. The three-dimensional solid model generating means 44 and the corresponding steps SA6-SA8 are adapted or formulated to generate a three-dimensional solid model on the basis of the intersecting portions of endless geometries which are generated by sweeping of the sweep boundaries Ri and which have the cross sectional shapes corresponding to the sweep boundaries Ri (projection boundaries $S_T$). In the present embodiment, the number of the sweep boundaries Ri which are determined by the sweep boundary determining means 42 and which are swept by the solid model generating means 44 is considerably smaller than the number of all possible combinations of the projection boundaries of the wire-frame models which are swept to generate the solid model in the conventional three-dimensional solid model generating system and method. Accordingly, the time required for the computer to operate for generating the desired solid model is significantly reduced in the present embodiment of the three-dimensional solid model generating method and apparatus.

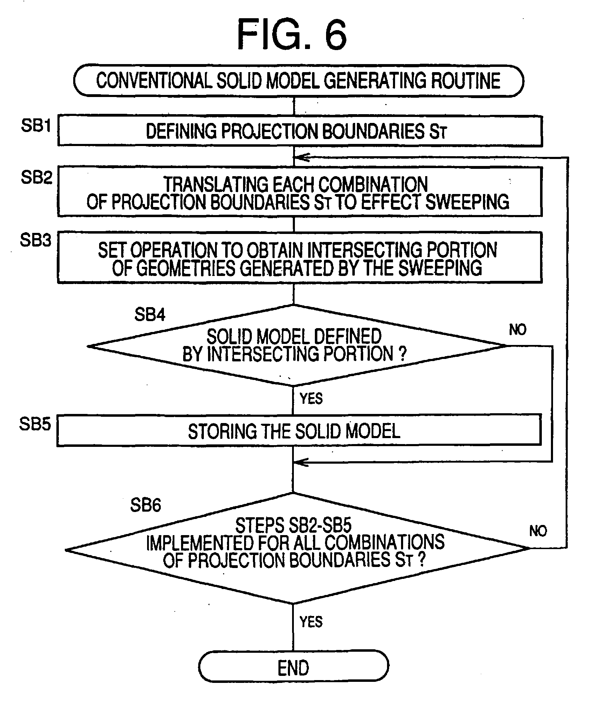

In the conventional system, a three-dimensional solid model generating routine as illustrated in the flow chart of Fig. 6 is executed to sweep all possible combinations of the projection boundaries $S_T$ of stored three-dimensional wire-frame models, and effect the determination to generate a three-dimensional solid model, for each of those combinations. The conventional routine is initiated with step SB1 identical with step SA1, to define the projection boundaries $S_T$ of the stored wire-frame models. Step SB1 is followed by step SB2 in which each combination of the projection boundaries is swept as in step SA6, and step SB3 in which a set operation is performed as in step SA7. Then, the control flow goes to step SB4 to determine whether the intersecting portion of the geometries generated by the sweeping of the projection boundaries of the combination in question represents a solid model. If an affirmative decision (YES) is obtained in step SB4, the control flow goes to step SB5 to determine and store the intersecting portion as a solid model. Step SB5 is followed by step SB6 to determine whether steps SB2-SB5 have been implemented for all combinations of the projection boundaries $S_T$. Steps SB2-SB5 are repeatedly implemented until an affirmative decision (YES) is obtained in step SB6. If this conventional system is adapted to sweep all combinations of projection boundaries of wire-frame models whose number is equal to "n", steps SB2-SB5 should be repeated as many as $n^2$ times even when each combination consists of two projection boundaries. In other words, the number of the combinations of the projection boundaries is equal to $n^2$. In the system of the present embodiment illustrated in the flow chart of Fig. 4, steps SA3-SA5 should be repeated $n^2$ times, but the number of repetition of steps SA6-SA9 is significantly reduced, and the time required for these steps SA6-SA9 is reduced to about one third of the time conventionally required for steps SB2-SB5. In this respect, it is noted that the time required for one cycle of implementation of steps SA3-SA5 is considerably shorter than that of steps SA6-SA9.

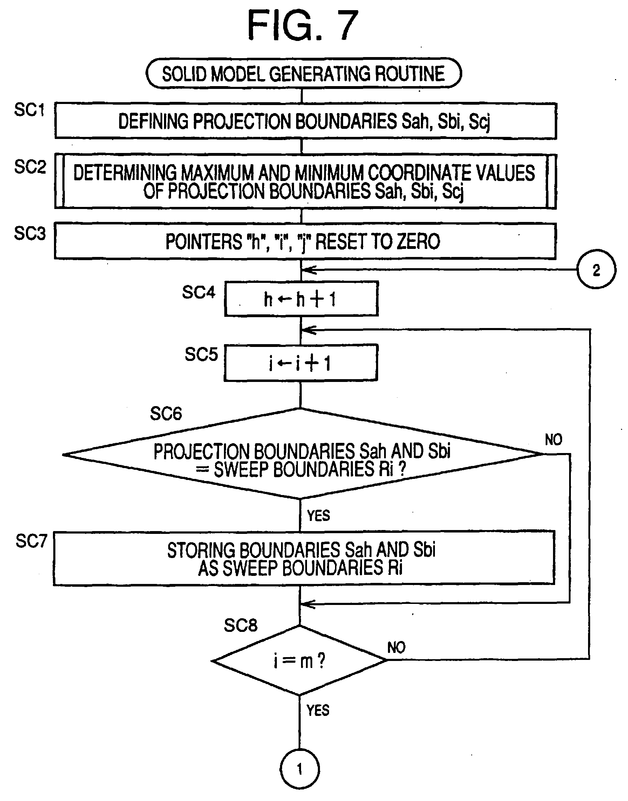

Referring to Figs. 7-10, there will be described a second embodiment of this invention. The same reference numerals and characters as used in the first embodiment will be used in the second embodiment, to identify the corresponding elements, and redundant description of these elements is not provided.

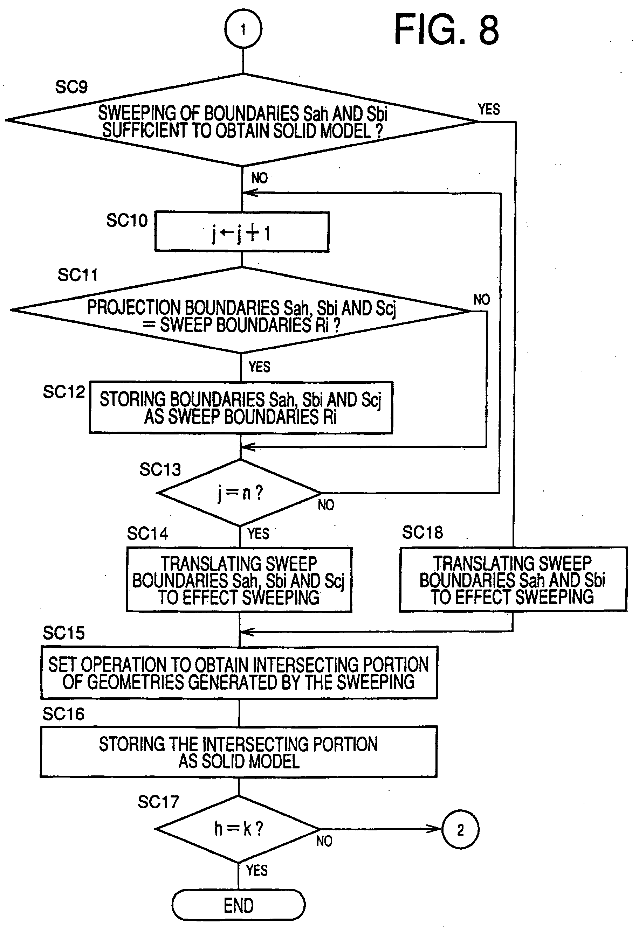

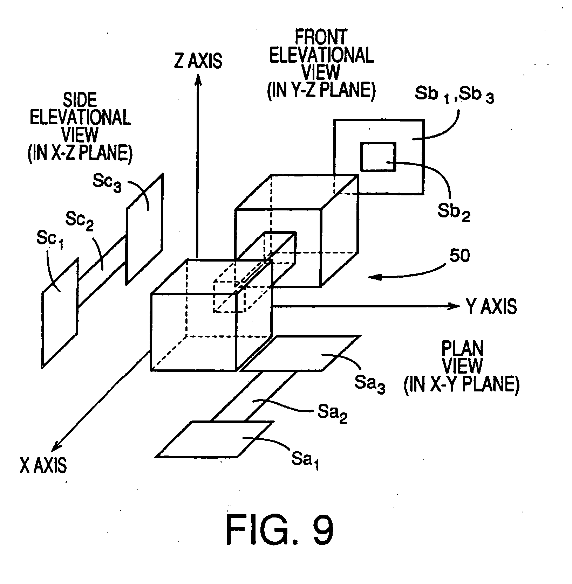

The flow charts of Figs. 1 and 8 illustrate a solid model generating routine where there exist a plurality of projection boundaries in each of the three mutually perpendicular two-dimensional planes of the X-Y-Z rectangular coordinate system. As in the first embodiment, each projection boundary S is defined by a closed loop defined by the appropriate edges of three-dimensional wire-frame models stored in the primary storage device 14. An example of such wire-frame models is shown generally at 50 in Fig. 9.

The routine of Figs. 7 and 8 is initiated with step SC1 corresponding to the projection boundary defining means 38, to define projection boundaries Sah ($h = 1 \sim k$), Sbi ($i = 1 \sim m$) and Scj ($j = 1 \sim n$) of each wire-frame model, which are projected in the respective X-Y plane (plan view), Y-Z plane (front elevational view) and X-Z plane (side elevational view). As in step SA1, each projection boundary Sah, Sbi, Scj is defined depending upon whether a closed loop is defined by appropriate edges of the wire-frame model 50, for example, in which "k", "m" and "n" are all equal to "3".

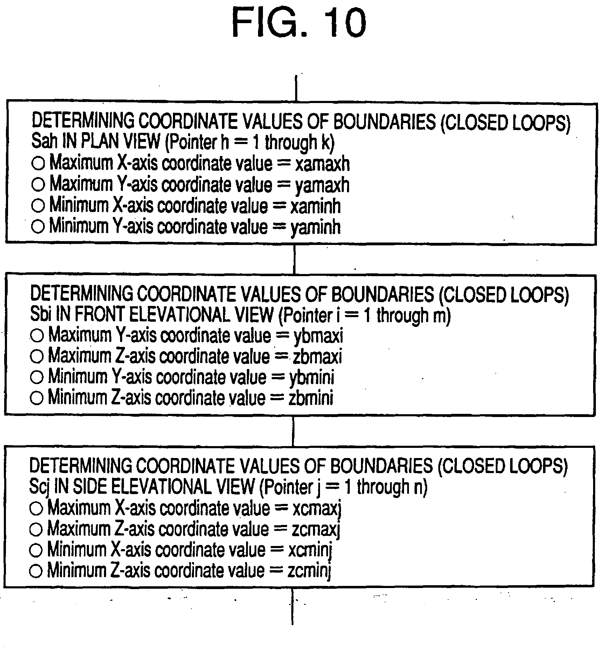

Step SC1 is followed by step SC2 corresponding to the maximum and minimum coordinate determining means 40, to determine the maximum and minimum coordinate values of each projection boundaries Sah, Sbi, Scj, as shown in detail in Fig. 10. Then, the control flow goes to step SC3 to reset pointers "h", "i" and "j" to "0", and then to steps SC4 and SC5 to increment the pointers "h" and "i", respectively.

Step SC5 is followed by steps SC6-SC12 corresponding to the sweep boundary determining means 42. Step SC6 is provided to determine whether the maximum and minimum coordinate values yamaxh and yaminh of the projection boundary Sah in the X-Y plane are equal to the maximum and minimum coordinate values ybmaxi and bmini of the projection boundary Sbi in the Y-Z plane. If a negative decision (NO) is obtained in step SC6, the control flow goes to step SC8. If an affirmative decision (YES) is obtained in step SC6, the control flow goes to step SC7 in which the projection boundaries Sah and Sbi are stored as a set of sweep boundaries Ri.

Step SC7 is followed by step SC8 to determine whether the content of the point "i" has been increased to "m" (which is equal to "3" in the example of Fig. 9. If a negative decision (NO) is obtained in step SC8, the control flow goes back to step SC5 to increment the pointer "i", and steps SC6 and SC7 are implemented for the next combination of the projection boundaries Sah and Sbi. With steps SC5-SC7 being repeatedly implemented, the combinations of the projection boundaries Sah, Sbi are changed with the projection boundary Sbi being sequentially changed, and sets of sweep boundaries Ri are selected from these different combinations. If an affirmative decision (YES) is obtained in step SC8, the control flow goes to step SC9 (Fig. 8) to determine whether the sets of sweep boundaries Ri each set consisting of two projection boundaries Sah and Sbi in the X-Y and Y-Z planes are sufficient to generate a desired three-dimensional solid model. When the desired solid model is generated from relatively complex wire-frame models such as the wire-frame model 50 shown in Fig. 9, it is necessary to sweep three projection boundaries Sah, Sbi and Scj, for generating the solid model. The operator of the system determines whether the two or three sweep boundaries are necessary. Where the operator enters a command selecting the sweeping of the three projection boundaries Sah, Sbi and Scj, a negative decision (NO) is obtained in step SC9, and the control flow goes to step SC10 to increment the pointer "j". Step SC10 is followed by step SC11 to determine whether the maximum and minimum z-axis coordinate values zbmaxi and zbmini of the projection boundary Sbi in the Y-Z plane are equal to the maximum and minimum z-axis coordinate values zcmaxj and zcminj of the projection boundary Scj in the Y-Z plane, while at the same time the maximum and minimum x-axis coordinate values xamaxh and xaminh of the projection boundary Sah in the X-Y plane are equal to the maximum and minimum x-axis coordinate values xcmaxj and xcminj of the projection boundary Scj in the Y-Z plane. If a negative decision (NO) is obtained in step SC11, the control flow goes to step SC13, while skipping step SC12. If an affirmative decision (YES) is obtained in step SC11, the control flow goes to step SC12 in which the projection boundaries Sah, Sbi and Scj are stored as a set of three sweep boundaries Ri.

Step SC12 is followed by step SC13 to determine whether the content of the pointer "j" has been increased to "n" (which is equal to 3 in the example of Fig. 9). If a negative decision (NO) is obtained in step SC13, the control flow goes to step SC10 to increment the pointer "j", to change the projection boundary Scj for changing the combination of the projection boundaries Sah, Sbi and Scj which is checked in step SC11. If an affirmative decision (YES) is obtained in step SC13, the control flow goes to steps SC14, SC15 and SC16 corresponding to the three-dimensional solid model generating means 44, to effect sweeping of the determined sweep boundaries Ri, perform a set operation to obtain an intersection set, and store the intersecting portion as a solid model, as described above with respect to steps SA6, SA7 and SA8.

Step SC16 is followed by step SC17 to determine whether the content of the the pointer "h" have been increased to "k" (which is equal to "3" in the example of Fig. 9). If a negative decision (NO) is obtained in step SC17, the control flow goes back to step SC4 to increment the pointer "h". If an affirmative decision (YES) is obtained in step SC17, the solid model generating routine of Figs. 7 and 8 is terminated.

Where the desired three-dimensional solid model is generated from relatively simple wire-frame models such as the wire-frame model 32 having only one projection boundary in each two-dimensional plane, a negative decision (NO) is obtained in step SC9, and the control flow goes to step SC18 in which the projection boundaries Sah and Sbi determined as the sweep boundaries Ri are swept. Step S18 is followed by steps SC15-SC17 described above.

Like the first embodiment, the present second embodiment includes the maximum and minimum coordinate determining means 40 (and the corresponding step SC2), the sweep boundary determining means 42 (and the corresponding steps SC6-SC12), and the three-dimensional solid model generating means 44 (and the corresponding steps SC14-SC16). In the present embodiment, too, the number of the sweep boundaries Ri which are determined by the sweep boundary determining means 42 and which are swept by the solid model generating means 44 is considerably smaller than the number of all possible combinations of the projection boundaries of the wire-frame models which are swept to generate the solid model in the conventional three-dimensional solid model generating system and method. Accordingly, the time required for the computer to operate for generating the desired solid model is significantly reduced in the present embodiment of the three-dimensional solid model generating method and apparatus.

The second embodiment further includes checking means corresponding to step SC9, which is adapted to determine whether the sweeping of the two projection boundaries Sah and Sbi in the X-Y and Y-Z planes is sufficient to generate a desired three-dimensional solid model. Described more specifically, if there exists only one projection boundary Sah in the X-Y plane whose maximum and minimum y-axis coordinate values yamaxh and yaminh are equal to the maximum and minimum y-axis coordinate values ybmaxi and ybmini of the projection boundary Sbi in the Y-Z plane, it is not necessary to determine whether the maximum and minimum z-axis coordinate values zbmaxi and zbmini of the projection boundary Sbi in the Y-Z plane are equal to the maximum and minimum z-axis coordinate values zcmaxj and zcminj of the projection boundary Scj in the X-Z plane, and whether the maximum and minimum x-axis coordinate values xamaxh and xaminh of the projection boundary Sah in the X-Y plane are equal to the maximum and minimum x-axis coordinate values xcmaxj and xcminj of the projection boundary Scj in the X-Z plane. In this case, the solid model generating means SC18, SC14-SC16 is operated without the sweep boundary determining means 42 being operated in steps SC10-SC14, so that the solid model is generated on the basis of the intersecting portion of the two geometries generated by the sweeping of the two projection boundaries Sah and Sbi. Accordingly, the required time for generating the solid model is further reduced where the wire-frame models used are relatively simple.

While the presently preferred embodiments of this invention have been described above in detail by reference to the accompanying drawings, it is to be understood that the invention may be otherwise embodied.

For instance, the routine of Fig. 4 of the first embodiment may be modified such that where the wire-frame models are simple in geometry like the wire-frame model shown in Fig. 3, only the maximum and minimum y-axis coordinate values $Y_{XYmax}$ and $Y_{XYmin}$ of the projection boundary $S_{TXY}$ and the maximum and minimum y-axis coordinate values $X_{YZmax}$ and $Y_{YZmin}$ of the projection boundary $S_{TXZ}$ are determined in step SA2, and those maximum and minimum y-axis coordinate values are compared in step SA3 to determine the sweep boundaries Ri. In this case, the only the projection boundaries $S_{TXY}$ and $S_{TYZ}$ determined as the sweep boundaries Ri are swept in step SA6.

The above modification is also possible even where the wire-frame models are not so simple as in the example of Fig. 3. That is, the sweep boundary determining means 42 is not required to determine sets of sweep boundaries each set consisting of three projection boundaries in the three mutually perpendicular two-dimensional planes, but may be adapted to determine sets of sweep boundaries each set consisting of at least two of the three projection boundaries in the three two-dimensional planes.

While the routine of Fig. 4 is adapted such that steps SA6-SA8 are implemented after steps SA3 and SA4 have been implemented for all combinations of the projection boundaries $S_T$ of all wire-frame models, steps SA6-SA8 may be implemented after steps SA3 and SA4 have been implemented for each combination of the projection boundaries $S_T$.

It is to be understood that the present invention may be embodied with various other changes, modifications and improvements, which may occur to those skilled in the art.

Method and apparatus for generating a three-dimensional solid model on the basis of three-dimensional wire-frame models, wherein projection boundaries of the fire-frame models are obtained by projection in two or three two-dimensional planes of a three-dimensional rectangular coordinate system (38, SA1, SC1), and maximum and minimum coordinate values of each projection boundary in two directions of the axes defining the plane of each projection boundary are determined (40, SA2, SC2), and wherein the projection boundaries which have the same maximum and minimum coordinate values in the direction of the common axis of each plane are determined as a set of sweep boundaries (42, SA3, SA4, SC6-SC12), so that the determined sweep boundaries are swept in respective directions perpendicular to the two-dimensional planes, to obtain an intersecting portion of geometries generated by the sweeping of the sweep boundaries, and to determine a three-dimensional solid model on the basis of the intersecting portion (44, SA6-SA8, SC14-SC16, SC18).

**Claims**

1. A method of generating a three-dimensional solid model on the basis of three-dimensional wire-frame models, wherein projection boundaries of said wire-frame models obtained by projection in at least two of three mutually perpendicular two-dimensional planes of a three-dimensional rectangular coordinate system are swept in respective directions perpendicular to said at least two two-dimensional planes, to obtain an intersecting portion of at least two geometries which are generated by sweeping of said projection boundaries, said intersecting portion being determined as a three-dimensional solid model, said method being **characterized by comprising:**

   a maximum and minimum coordinate determining step (SA2, SC2) of determining maximum coordinate values and minimum coordinate values of each of said projection boundaries ($S_T$, Sah, Sbi, Scj) in two directions parallel to respective two axes which define the two-dimensional plane of said each projection boundary;
   a sweep boundary determining step (SA3, SA4, SC6-SC12) of determining sets of sweep boundaries (Ri) each set consisting of the projection boundaries in said at least two two-dimensional planes, which boundaries have the same maximum and minimum coordinate values in the direction of the axis which is common to said at least two two-dimensional planes; and
   a three-dimensional solid model generating step (SA6-SA8, SC14-SC16, SC18) of generating a three-dimensional solid model on the basis of said intersecting portion of said at least two geometries generated by sweeping of said sweep boundaries determined in said sweep boundary determining step.

2. A method according to claim 1, wherein said maximum and minimum coordinate determining step (SA2) comprises determining said maximum coordinate values and said minimum coordinate values of each of the two projection boundaries in the respective two two-dimensional planes selected from said three mutually perpendicular two-dimensional planes of said rectangular coordinate system.

3. A method according to claim 2, wherein said sweep boundary determining step (SA3, SA4) comprises determining a set of two sweep boundaries which consists of said two projection boundaries having the same maximum and minimum coordinate values in the direction of the axis common to said two two-dimensional planes, said three-dimensional solid model generating step (SA6-SA8) comprising generating the three-dimensional solid model on the basis of said intersecting portion of the two geometries generated by sweeping of said two sweep boundaries determined in said sweep boundary determining step.

4. A method according to claim 1, further comprising a step (SC9) for checking whether there exists only one projection boundary in one of said three two-dimensional planes, which one projection boundary has the maximum and minimum coordinate values as any projection boundary in another of said three two-dimensional planes in the direction of the common axis of said one and another two-dimensional planes, and wherein an operation to generate said three-dimensional solid model is initiated in said three-dimensional solid model generating step (SC15, SC16, SC18), without determining whether the maximum and minimum coordinate values of the projection boundaries in said one and another two-dimensional planes are equal to those of the projection boundary in the rest of said three two-dimensional planes in the directions of the common axes, if there exists only one projection boundary in said one two-dimensional plane.

5. An apparatus for generating a three-dimensional solid model on the basis of three-dimensional wire-frame models, wherein projection boundaries of said wire-frame models obtained by projection in at least two of three mutually perpendicular two-dimensional planes of a three-dimensional rectangular coordinate system are swept in respective directions perpendicular to said at least two two-dimensional planes, to obtain an intersecting portion of at least two geometries which are generated by sweeping of said projection boundaries, said intersecting portion being determined as a three-dimensional solid model, said apparatus being **characterized by comprising:**

   maximum and minimum coordinate determining means (40) for determining maximum coordinate values and minimum coordinate values of each of said projection boundaries ($S_T$' Sah, Sbi, Scj) in two directions parallel to respective two axes which define the two-dimensional plane of said each projection boundary;
   sweep boundary determining means (42) for determining sets of sweep boundaries (Ri) each set consisting of the projection boundaries in said at least two two-dimensional planes, which boundaries have the same maximum and minimum coordinate values in the direction of the axis which is common to said at least two two-dimensional planes; and
   three-dimensional solid model generating means (44) for generating a three-dimensional solid model on the basis of said intersecting portion of said at least two geometries generated by sweeping of said sweep boundaries determined by said sweep boundary determining means.

6. An apparatus to claim 5, wherein said maximum and minimum coordinate determining means (40) comprises means for determining said maximum coordinate values and said minimum coordinate values of each of the two projection boundaries in the respective two two-dimensional planes selected from said three mutually perpendicular two-dimensional planes of said rectangular coordinate system.

7. An apparatus according to claim 6, wherein said sweep boundary determining means comprises means (42) for determining a set of two sweep boundaries which consists of said two projection boundaries having the same maximum and minimum coordinate values in the direction of the axis common to said two two-dimensional planes, said three-dimensional solid model generating means (44) comprising generating the three-dimensional solid model on the basis of said intersecting portion of the two geometries generated by sweeping of said two sweep boundaries determined by said sweep boundary determining means.

8. An apparatus according to claim 5, further comprising checking means (SC9) for checking whether there exists only one projection boundary in one of said three two-dimensional planes, which one projection boundary has the maximum and minimum coordinate values as any projection boundary in another of said three two-dimensional planes in the direction of the common axis of said one and another two-dimensional planes, and wherein said three-dimensional solid model generating means (44, SC15, SC16, SC18) initiates an operation to generate said three-dimensional solid model, without determining whether the maximum and minimum coordinate values of the projection boundaries in said one and another two-dimensional planes are equal to those of the projection boundary in the rest of said three two-dimensional plane in the directions of the common axes, if said checking means determines that there exists only one projection boundary in said one two-dimensional plane.

CAD SYSTEM
—10

CENTRAL
PROCESSING
UNIT

12

14 PRIMARY STORAGE DEVICE

16 AUXILIARY STORAGE DEVICE

18 DISPLAY DEVICE

20 KEYBOARD

22 TABLET

24 DIAL

26 PRINTER

28 PAPER TAPE PUNCHER

30 NETWORK CONTROLLER

# FIG. 1

PRIMARY STORAGE DEVICE

14

THREE-DIMENSIONAL WIRE-FRAME MODEL

38

PROJECTION BOUNDARY DEFINING MEANS

LIST OF EDGES

| EDGE NO. | VERTEX NO. | |
|---|---|---|
| L1 | P1 | P2 |
| L2 | P2 | P3 |
| . | P3 | P4 |
| . | . | . |
| . | . | . |
| . | . | . |
| . | . | . |
| L12 | P4 | P8 |

LIST OF VERTICES

| VERTEX NO. | COORDINATE VALUES | | |
|---|---|---|---|
| | x | y | z |
| P1 | $x_1$ | $y_1$ | $z_1$ |
| P2 | $x_2$ | $y_2$ | $z_2$ |
| P3 | . | . | . |
| P4 | . | . | . |
| P5 | . | . | . |
| P6 | . | . | . |
| P7 | . | . | . |
| P8 | . | . | . |

40

MAXIMUM AND MINIMUM COORDINATE DETERMINING MEANS

LIST OF SURFACES

| SURFACE NO. | EDGE NO. | | | |
|---|---|---|---|---|
| S1 | L1 | L2 | L3 | L4 |
| S2 | L3 | L11 | L7 | L12 |
| S3 | L5 | L8 | L7 | L6 |
| S4 | L1 | L9 | L5 | L10 |
| S5 | L4 | L12 | L8 | L9 |
| S6 | L2 | L10 | L6 | L11 |

42

SWEEP BOUNDARY DETERMINING MEANS

44

THREE-DIMENSIONAL SOLID MODEL GENERATING MEANS

THREE-DIMENSIONAL SOLID MODEL

FIG. 2

FIG. 3

EP 0 822 521 A2

# FIG. 4

( SOLID MODEL GENERATING ROUTINE )

SA1 — DEFINING PROJECTION BOUNDARIES $S_T$ OF WIRE-FRAME MODELS

SA2 — DETERMINING MAXIMUM AND MINIMUM COORDINATE VALUES OF PROJECTION BOUNDARIES OF EACH WIRE-FRAME MODEL

SA3 — MAXIMUM AND MINIMUM COORDINATE VALUES OF PROJECTION BOUNDARIES $S_T$ EQUAL TO EACH OTHER ?  — NO

YES

SA4 — STORING THE PROJECTION BOUNDARIES $S_T$ AS A SET OF SWEEP BOUNDARIES $R_i$

SA5 — STEPS SA3 AND SA4 IMPLEMENTED FOR ALL COMBINATIONS OF PROJECTION BOUNDARIES $S_T$ OF ALL WIRE-FRAME MODELS ?  — NO

YES

SA6 — TRANSLATING SWEEP BOUNDARIES $R_i$ TO EFFECT SWEEPING

SA7 — SET OPERATION TO OBTAIN INTERSECTION SET REPRESENTATIVE OF MUTUALLY INTERSECTING PORTION OF GEOMETRIES GENERATED BY THE SWEEPING

SA8 — STORING THE INTERSECTING PORTION AS SOLID MODEL

SA9 — STEPS SA6-SA8 IMPLEMENTED FOR ALL SETS OF SWEEP BOUNDARIES $R_i$ ?  — NO

YES

( END )

16

**FIG. 5**

# FIG. 6

```
┌──────────────────────────────────────────────────────────┐
( CONVENTIONAL SOLID MODEL GENERATING ROUTINE )
└──────────────────────────────────────────────────────────┘
```

SB1 — DEFINING PROJECTION BOUNDARIES $S_T$

SB2 — TRANSLATING EACH COMBINATION OF PROJECTION BOUNDARIES $S_T$ TO EFFECT SWEEPING

SB3 — SET OPERATION TO OBTAIN INTERSECTING PORTION OF GEOMETRIES GENERATED BY THE SWEEPING

SB4 — SOLID MODEL DEFINED BY INTERSECTING PORTION ?  NO

YES

SB5 — STORING THE SOLID MODEL

SB6 — STEPS SB2-SB5 IMPLEMENTED FOR ALL COMBINATIONS OF PROJECTION BOUNDARIES $S_T$ ?  NO

YES

( END )

18

# FIG. 7

( SOLID MODEL GENERATING ROUTINE )

SC1 | DEFINING PROJECTION BOUNDARIES Sah, Sbi, Scj

SC2 | DETERMINING MAXIMUM AND MINIMUM COORDINATE VALUES OF PROJECTION BOUNDARIES Sah, Sbi, Scj

SC3 | POINTERS "h", "i", "j" RESET TO ZERO

( 2 )

SC4 | $h \leftarrow h + 1$

SC5 | $i \leftarrow i + 1$

SC6    PROJECTION BOUNDARIES Sah AND Sbi = SWEEP BOUNDARIES Ri ?    NO

YES

SC7 | STORING BOUNDARIES Sah AND Sbi AS SWEEP BOUNDARIES Ri

SC8    $i = m$ ?    NO

YES

( 1 )

# FIG. 8

(1)

SC9 — SWEEPING OF BOUNDARIES Sah AND Sbi SUFFICIENT TO OBTAIN SOLID MODEL ? — YES

NO

SC10 — $j \leftarrow j + 1$

SC11 — PROJECTION BOUNDARIES Sah, Sbi AND Scj = SWEEP BOUNDARIES Ri ? — NO

YES

SC12 — STORING BOUNDARIES Sah, Sbi AND Scj AS SWEEP BOUNDARIES Ri

SC13 — $j = n$ ? — NO

YES

SC14 — TRANSLATING SWEEP BOUNDARIES Sah, Sbi AND Scj TO EFFECT SWEEPING

SC18 — TRANSLATING SWEEP BOUNDARIES Sah AND Sbi TO EFFECT SWEEPING

SC15 — SET OPERATION TO OBTAIN INTERSECTING PORTION OF GEOMETRIES GENERATED BY THE SWEEPING

SC16 — STORING THE INTERSECTING PORTION AS SOLID MODEL

SC17 — $h = k$ ? — NO — (2)

YES

END

FIG. 9

# FIG. 10

DETERMINING COORDINATE VALUES OF BOUNDARIES (CLOSED LOOPS)
Sah IN PLAN VIEW (Pointer h = 1 through k)
○ Maximum X-axis coordinate value = xamaxh
○ Maximum Y-axis coordinate value = yamaxh
○ Minimum X-axis coordinate value = xaminh
○ Minimum Y-axis coordinate value = yaminh

DETERMINING COORDINATE VALUES OF BOUNDARIES (CLOSED LOOPS)
Sbi IN FRONT ELEVATIONAL VIEW (Pointer i = 1 through m)
○ Maximum Y-axis coordinate value = ybmaxi
○ Maximum Z-axis coordinate value = zbmaxi
○ Minimum Y-axis coordinate value = ybmini
○ Minimum Z-axis coordinate value = zbmini

DETERMINING COORDINATE VALUES OF BOUNDARIES (CLOSED LOOPS)
Scj IN SIDE ELEVATIONAL VIEW (Pointer j = 1 through n)
○ Maximum X-axis coordinate value = xcmaxj
○ Maximum Z-axis coordinate value = zcmaxj
○ Minimum X-axis coordinate value = xcminj
○ Minimum Z-axis coordinate value = zcminj